Europäisches Patentamt

European Patent Office

Office européen des brevets

(19)

(11) **EP 1 481 459 B1**

(12) **FASCICULE DE BREVET EUROPEEN**

(45) Date de publication et mention
de la délivrance du brevet:
**23.11.2005 Bulletin 2005/47**

(51) Int Cl.⁷: **H02K 7/10**

(21) Numéro de dépôt: **03722690.9**

(86) Numéro de dépôt international:
**PCT/FR2003/000687**

(22) Date de dépôt: **04.03.2003**

(87) Numéro de publication internationale:
**WO 2003/075434 (12.09.2003 Gazette 2003/37)**

(54) **ACTIONNEUR LINEAIRE COMPRENANT UN MOTEUR ELECTRIQUE POLYPHASE SANS BALAIS**

LINEARANTRIEB MIT EINEM MEHRPHASIGEN BÜRSTENLOSEN ELEKTROMOTOR

LINEAR ACTUATOR COMPRISING A BRUSHLESS POLYPHASE ELECTRIC MOTOR

(84) Etats contractants désignés:
**AT BE BG CH CY CZ DE DK EE ES FI FR GB GR HU IE IT LI LU MC NL PT RO SE SI SK TR**

(30) Priorité: **05.03.2002 FR 0202749**
**28.10.2002 FR 0213448**

(43) Date de publication de la demande:
**01.12.2004 Bulletin 2004/49**

(73) Titulaire: **Moving Magnet Technologies M.M.T.**
**25000 Besançon (FR)**

(72) Inventeurs:
• **GANDEL, Pierre**
**F-25660 Montfaucon (FR)**
• **PRUDHAM, Daniel**
**F-25220 Thise (FR)**

• **ALZINGRE, Jean-Daniel**
**F-25720 Larnod (FR)**
• **FOUCAUT, Antoine**
**F-70190 Montarlot les Rioz (FR)**

(74) Mandataire: **Rhein, Alain**
**Cabinet Bleger-Rhein**
**17, rue de la Forêt**
**67550 Vendenheim (FR)**

(56) Documents cités:
| | |
|---|---|
| **EP-A- 0 448 515** | **WO-A-99/10965** |
| **DE-A- 2 743 908** | **DE-A- 10 003 129** |
| **US-A- 3 161 074** | **US-A- 4 463 291** |
| **US-A- 4 501 981** | **US-A- 4 553 056** |
| **US-A- 5 402 022** | **US-A- 5 749 350** |
| **US-A- 5 931 142** | |

## Description

L'invention concerne un actionneur linéaire comprenant un moteur électrique polyphasé sans balais, comportant un stator et un rotor, ce dernier agissant sur un organe de commande au travers de moyens d'entraînement prévus aptes à transformer, sur plusieurs tours, son mouvement de rotation en un déplacement linéaire (voir US-A- 4 463 291).

La présente invention concerne le domaine des actionneurs linéaires comportant, de manière générale, un moteur électromagnétique de type polyphasé sans balais. Elle trouve une application toute particulière dans le cas où il est recherché une commande sous forme d'un déplacement linéaire rapide, comme cela est nécessaire, par exemple, pour la commande de soupape d'un dispositif de recirculation des gaz d'échappement d'un moteur diesel, mais aussi pour la commande de vannes d'admission d'air.

A l'heure actuelle, pour ces applications il est fait appel à des actionneurs électromagnétiques linéaires à entraînement direct ou bien à des actionneurs linéaires basés sur un moteur électrique de type pas à pas utilisant un système de transformation de mouvement de rotation en un déplacement linéaire, de tels systèmes étant susceptibles d'adopter différents modes de réalisation. En particulier, il est connu des systèmes à cames, à pignon et crémaillère ou encore du type vis-écrou.

Il est tout particulièrement connu par le document DE-A-100 03 129 un actionneur linéaire comportant un moteur de type pas à pas, pourvu d'un rotor muni en périphérie d'aimants de polarité alternée au regard d'épanouissements polaires d'un stator. Celui-ci comporte au moins deux bobines d'excitation électriques permettant l'asservissement du moteur au travers d'une commutation électronique. A noter que dans le prolongement axial du stator, il est encore prévu un capteur à effet hall entourant le rotor en tant que dispositif de détection de position.

Pour en revenir au rotor, celui-ci comporte, intérieurement et de manière coaxiale, un écrou fileté en prise avec une tige filetée immobilisée en rotation.

Ainsi, sous l'effet de la rotation du rotor et donc de l'écrou qui lui est solidaire, il en résulte un déplacement en translation de la tige filetée constituant, substantiellement l'organe de commande.

le problème que posait ce type d'actionneur linéaire à moteur polyphasé consistait, en ce qu'en cas de défaillance du moteur, ne serait-ce que suite à une coupure de son alimentation électrique, l'organe de commande et, donc, la pièce, par exemple la soupape, sur laquelle il agit conserve la position atteinte avant qu'intervienne la défaillance. Par conséquent, ne regagnant pas une position de sécurité, il peut en découler un disfonctionnement plus grave au niveau de l'unité dans laquelle s'inscrit cette pièce commandée.

En prenant pour exemple le cas particulier de la commande de soupapes de dispositif de recirculation des gaz d'échappement d'un moteur diesel, il est impératif que ces soupapes soient maintenues refermées sur leur siège, de manière à empêcher la recirculation des gaz d'échappement lorsque intervient une telle défaillance, sans quoi se sont les conditions de fonctionnement du moteur lui-même qui se voient altérées.

Aussi et tel que décrit dans le document US-4 501 981, il a été imaginé d'équiper ce type d'actionneur à moteur pas à pas de moyens de rappel élastiques aptes à ramener la tige filetée dans une position de référence en cas de coupure d'alimentation électrique. Si ces moyens de rappel élastiques peuvent emprunter la forme d'un ressort hélicoïdal agissant directement sur la tige fileté, dans un second mode de réalisation décrit dans ce document US-4 501 981 un ressort spiral peut encore agir sur le rotor pour, lors d'une telle coupure de courant, commander en rotation ce dernier et ramener l'organe de commande dans sa position de référence.

Cependant, l'on observera qu'un moteur polyphasé à courant continu, du type pas à pas, pose un problème de temps de réponse et de déplacement saccadé dû au fait qu'un pôle aimanté du rotor trouve une position d'équilibre privilégiée lorsqu'il est placé en regard d'un pôle du stator ou lorsqu'une transition entre deux pôles magnétiques se trouve en regard d'un tel pôle statorique.

Le couple de détente constitue de ce fait une fonction périodique de la position angulaire dont la fréquence dépend du nombre de pôles magnétiques et du nombre de pôles statoriques.

Finalement, le moteur du type pas à pas présente deux types de désavantages importants pour, à la fois, assurer une commande rapide d'un organe et permettre à ce denier de regagner facilement une position de référence sous l'effet d'un rappel élastique :

- le couple de détente, qui correspond au couple sans courant du moteur est excessif et empêche un rappel aisé dans une position de référence
- le principe de fonctionnement du moteur pas à pas ne permet que de commander un déplacement, sans avoir la possibilité de vérifier si la séquence imposée a été correctement exécutée.

A ce propos, il a été décrit dans le document FR-A-2.754.953, un moteur polyphasé, sans balai et à commutation électronique présentant un faible couple de détente. Tout particulièrement la partie statorique de ce moteur présente au moins deux circuits en forme de W comportant chacun une bobine électrique entourant le pôle statorique central. Ces circuits en W sont disposés de façon à ce que lorsque l'un des pôles statorique centraux se trouve en face d'une transition magnétique, l'autre pôle statorique central se trouve approximativement en face d'un pôle magnétique. Les épanouissements polaires de ces pôles statoriques centraux des deux circuits en W appartiennent à des phases différentes et sont écartés angulairement de 120°. Ainsi, la forme du circuit statorique en W assure la fermeture des lignes de champs entre le pôle central qui reçoit la bobine et les deux pôles adjacents.

L'invention résout le problème posé en proposant un actionneur linéaire présentant les caractéristiques de la revendication 1.

Selon un mode de réalisation de l'invention, ces moyens de rappel élastiques et/ou magnétiques se présentent sous forme d'au moins un élément élastique et/ou magnétique de commande en rotation du rotor.

Il va sans dire que lorsque l'actionneur fonctionne normalement, le moteur se doit de s'opposer à l'action inverse que procure un tel élément élastique et/ou magnétique de commande en rotation. Par conséquent, le moteur doit être dimensionné pour produire un couple suffisant pour pouvoir amener l'organe de commande depuis une position extrême dans une autre, par exemple depuis une position de fermeture d'une soupape à sa position d'ouverture, et, en même temps, pour contrecarrer le couple résistant que procure l'élément élastique et/ou magnétique. A l'inverse, celui-ci doit être prévu apte à ramener cet organe commandé systématiquement dans sa position de référence.

A noter, à ce propos, qu'un tel élément élastique et/ou magnétique se doit de procurer un couple d'autant plus faible que le moteur présente, quant à lui, un couple de détente réduit.

On observera, encore, que l'action de cet élément élastique et/ou magnétique agissant directement sur le rotor vient également contrecarrer les performances du moteur du point de vue de son couple de maintien, c'est à dire le couple continu qu'il est à même de produire pour maintenir la pièce commandée, par exemple une soupape, en position d'ouverture.

Selon un autre mode de réalisation, les moyens de rappel élastiques sont conçus sous forme d'au moins un élément élastique et/ou magnétique apte à agir, directement, sur l'organe de commande. Cela impose, évidemment, que les moyens d'entraînement prévus pour transformer le mouvement de rotation du rotor en un mouvement linéaire soient réversibles. Or, dans une conception simple correspondant à l'état de la technique décrit dans le document FR-A-2.754.953 sous forme d'un ensemble vis-écrou, le caractère réversible de tels moyens d'entraînement dépend directement de la démultiplication qu'ils procurent. En somme, plus le rapport de transmission est grand moins important sera l'effort que devra produire l'élément élastique et/ou magnétique pour, au travers d'une action directe sur l'organe de commande, ramener celui-ci dans une position de référence. Evidemment, le moteur doit, alors, être en mesure de fournir un couple plus important pour pouvoir agir sur cet organe de commande.

Ainsi, selon un troisième mode de réalisation il a été imaginé des moyens de rappel élastiques et/ou magnétiques sous forme d'une combinaison d'un élément élastique et/ou magnétique de commande en rotation du rotor et d'un autre agissant directement sur l'organe de commande, tous deux intervenant dans le même but.

On notera, encore, que la combinaison de tels éléments élastiques et/ou magnétiques permet de minimiser les pressions de contact à l'interface des pièces en mouvement des moyens d'entraînement prévus aptes à transformer le mouvement de rotation en un déplacement linéaire, de telles pressions de contact ayant pour conséquence, dans le temps, de dégrader le coefficient de frottement entre ces pièces, coefficient dont est, par ailleurs, tributaire la réversibilité du mouvement.

Un autre avantage qui résulte de la présente invention consiste en ce que le ou les éléments élastiques et/ou magnétiques contribuent à l'annulation du jeu mécanique entre les pièces en mouvement, ce qui permet d'éviter ou de réduire les bruits de fonctionnement de l'actionneur, ainsi que les à coups en phase transitoire de démarrage et d'arrêt.

De manière avantageuse, encore, aux moyens d'entraînement prévus pour transformer le mouvement de rotation du rotor en un mouvement linéaire est associé un dispositif réducteur réversible indépendant. Ce découplage des fonctions de réduction de vitesse et de transformation de mouvement permet l'utilisation d'un pas important au niveau du système hélicoïdal, de type vis-écrou ou autre, assurant cette dernière fonction. Le dispositif réducteur est alors paramétré indépendamment, sachant que son rendement est sensiblement constant par rapport à la démultiplication. Au final, cette séparation des fonctions offre, à réduction égale, un rendement global plus élevé comparé à l'utilisation d'un système hélicoïdal seul.

D'autres buts et avantages de la présente invention apparaîtront au cours de la description qui va suivre.

La compréhension de cette description sera facilitée en se référant aux dessins ci-joints, dans lesquels :

- la figure 1 est une représentation schématisée et en coupe axiale d'un actionneur électrique linéaire à moteur polyphasé conforme à l'invention ;
- la figure 2 est une vue similaire à la figure 1 illustrant un second mode de réalisation qui intègre un capteur de position linéaire;
- La figure 3 est une vue en coupe illustrant un troisième mode de réalisation où le rotor est monté à la manière d'un écrou sur son axe défini en forme d'une tige filetée ;
- la figure 4 est une représentation schématisée de la cinématique d'un actionneur comportant un dispositif réducteur sous forme d'un train épicycloïdal et des moyens d'entraînement prévus aptes à transformer le mouvement de rotation en un déplacement linéaire sous forme d'un système vis-écrou ;
- la figure 5 est une représentation similaire à la figure 4, les moyens d'entraînement prévus aptes à transformer le mouvement de rotation en un déplacement linéaire adoptant la forme d'un galet et d'une came;

- la figure 6 est une représentation schématisée de la cinématique d'un actionneur comportant un dispositif réducteur sous forme d'un différentiel et des moyens d'entraînement prévus aptes à transformer le mouvement de rotation en un déplacement linéaire sous forme d'un système vis-écrou ;

- la figure 7 est une représentation similaire à la figure 6, les moyens d'entraînement prévus aptes à transformer le mouvement de rotation en un déplacement linéaire adoptant la forme d'un galet et d'une came;

- la figure 8 est une représentation schématisée d'un mode de réalisation correspondant à la conception selon la figure 7, mais avec deux cames comportant des profils croisés et dont la rotation relative au travers du différentiel induit le glissement d'un galet sous forme d'une goupille provoquant la translation de l'organe de commande.

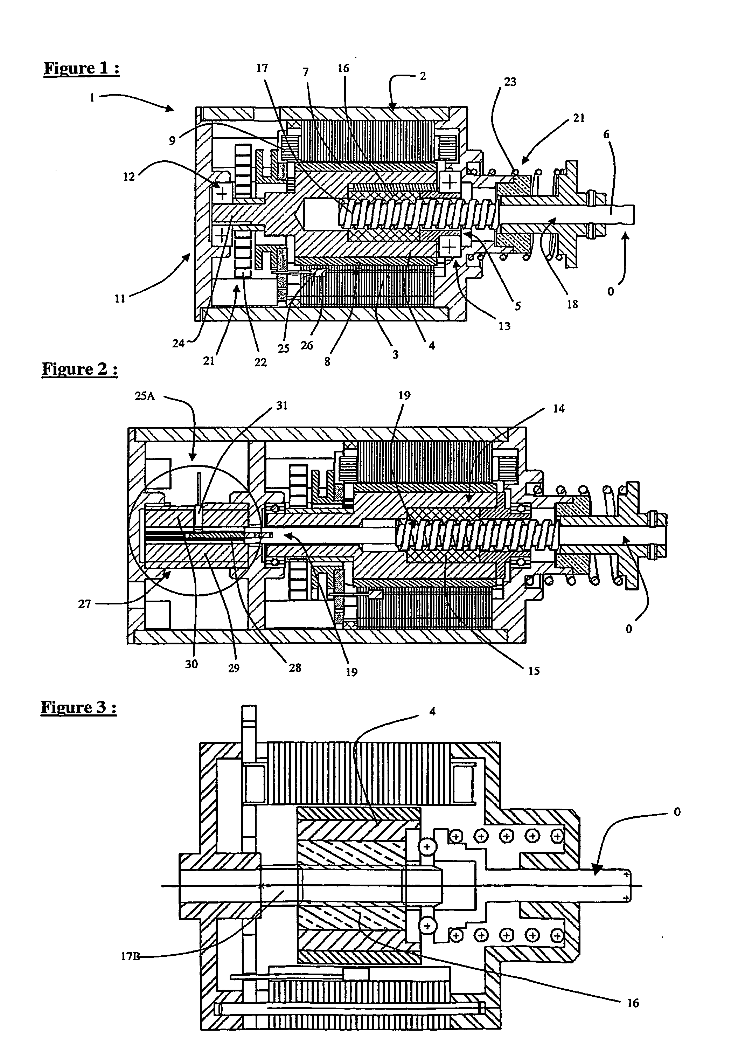

Tel que représenté dans les figures 1 et 2 du dessin ci-joint, la présente invention a trait à un actionneur électrique linéaire 1 comportant un moteur électrique polyphasé à courant continu 2, sans balais, composé d'un stator 3 et d'un rotor 4, ce dernier agissant sur des moyens d'entraînement 5, lesquels sont prévus aptes à transformer, sur plusieurs tours, le mouvement de rotation de ce rotor 4 en un déplacement linéaire 5.

Il est illustré dans les figures du dessin ci-joint des modes de réalisation de ces moyens d'entraînement 5, mais il convient de remarquer que la présente invention n'y est nullement limitée. En particulier, de tels moyens d'entraînement 5 peuvent emprunter la forme de dispositifs à cames, à pignon et crémaillère, etc.- sans que l'on sorte du cadre et de l'esprit de la présente invention.

Pour en revenir au moteur 2, son rotor 4 comporte, préférentiellement, N paires de pôles rotoriques 7 aimantés radialement en sens alterné, N étant supérieur ou égal à 4 tout en étant différent d'un multiple de 3.

Par ailleurs et pour l'obtention d'un couple magnétostatique sans courant aussi faible que possible, le stator 3 comporte, quant à lui, préférentiellement, P×9 pôles 8 identiques espacés de 40°/P, lesdits pôles statoriques 8 étant regroupés consécutivement par trois de manière à définir une phase constituée d'un circuit en W, regroupant trois pôles statoriques consécutifs, le pôle statorique central 8 portant le bobinage 9 de la phase correspondante 10.

En outre, les pôles statoriques centraux 8 de deux circuits en W correspondant chacun à une phase sont espacés angulairement de 120°.

Ce moteur 2 est du type sans balai, c'est à dire que les bobinages 9 et, donc, les phases 10 sont au moins au nombre de deux et alimentés au travers d'une unité d'asservissement électronique non représenté.

Le moteur 2 est logé dans un carter 11 comportant à l'une et/ou l'autre de ses extrémités des paliers 12, 13, maintenant en rotation le rotor 4.

Pour en revenir aux moyens d'entraînement 5, ceux-ci peuvent être définis, comme représenté dans les figures 1, 2, 3, 4 et 6, par un système vis-écrou 14. Plus particulièrement et comme visible dans les figures 1, 2, 4 et 6, au niveau d'un alésage axial 15 le rotor 4 porte un écrou 16 en prise avec une tige filetée coaxiale 17 ; 17A émergeant, éventuellement, du carter 11 au moins à l'une de ses extrémités 18. Ainsi, au travers du déplacement linéaire qui lui est communiqué par le rotor 4, cette tige filetée 17, 17A définit, directement ou indirectement, l'organe de commande O de l'actionneur 1.

Dans le mode de réalisation correspondant à la figure 3, l'écrou 16 que porte le rotor 4 est monté mobile sur une tige filetée fixe 17B. Ainsi, lors de la commande en rotation du moteur 2, le rotor 4 se déplace avec un mouvement hélicoïdal sous un stator 3 prolongé pour l'occasion et transmet son déplacement linéaire à l'organe de commande O immobilisé en rotation par des moyens appropriés.

Dans ces modes de réalisation correspondant aux figures 1,2 et 3, ce système vis-écrou 14 remplit également la fonction de réducteur et dans ce cas il est préférentiellement de type vis à billes.

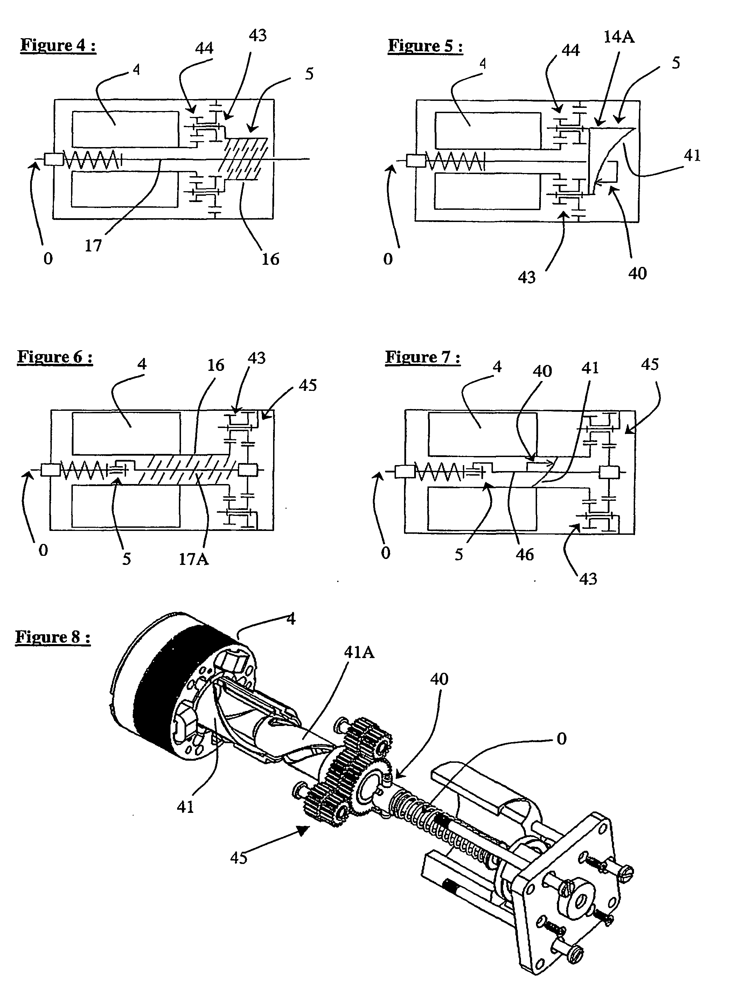

Dans le cadre des conceptions correspondant aux figures 5 et 7 ces moyens d'entraînement 5, prévus aptes à transformer le mouvement de rotation du rotor 4 en un déplacement linéaire adoptent la forme d'un système 14A du type galet 40 came 41. En somme, la tige 42, correspondant substantiellement à l'organe de commande O, porte le galet 40 venant évoluer le long d'une came circulaire 41 mise en rotation, directement ou indirectement comme cela sera décrit plus en avant, par le rotor 4.

La solution correspondant à la figure 8 fait intervenir des moyens d'entraînement 5 comportant la(ou une) première came 41 et une seconde came 41A avec des profils croisés prévues aptes à être entraînées en rotation avec un différentiel de vitesse, comme cela est expliqué plus en avant dans la description, pour induire à un galet 40A, sous forme d'une goupille, un glissement axial à même de provoquer la translation de l'organe de commande O.

Cette configuration présente un rendement supérieur à celui obtenu avec une came seule de profil hélicoïdal, contre laquelle vient s'appuyer un galet susceptible de se déplacer exclusivement de manière rectiligne.

Pour en revenir plus particulièrement au mode de réalisation correspondant aux figures 1 et 2, dans une position de référence, cette tige filetée 17 vient en butée, au travers de son extrémité 19 engagée dans l'alésage 15 du rotor 4, contre un épaulement 20 que comporte, intérieurement, cet alésage 15.

A titre d'exemple dans le cadre d'une application à la commande d'une soupape d'un dispositif de recirculation des gaz d'échappement de moteur diesel, l'actionneur peut avoir pour fonction que de commander, partant d'une position de fermeture, l'ouverture d'une soupape. En particulier, la position de fermeture correspond dans ce cas à une position de référence.

Dans le mode de réalisation représenté, cette position de référence peut correspondre à la position sortie de la tige filetée 17 de sorte que l'alimentation du moteur 2 et la rotation engendrée par le rotor 4 a pour conséquence de tirer la tige filetée 17 dans son alésage 15 pour, dans l'exemple précité, commander l'ouverture de ladite soupape. Cette position peut être conservée au travers du couple de maintien que procure le moteur lorsque l'on maintient son alimentation.

Selon l'invention, cet actionneur électrique linéaire comporte, en combinaison, des moyens de rappel élastiques et/ou magnétiques 21 pour, en cas de coupure de courant du moteur, repousser son organe de commande **O**, ici la tige filetée 17, dans sa position de référence.

En fait, ces moyens de rappels élastiques et/ou magnétiques 21 sont définis aptes à induire plusieurs tours au rotor 4 pour assurer ce retour en position de référence de l'organe de commande 0.

De tels moyens de rappel élastiques et/ou magnétiques 21 peuvent être constitués par un élément élastique et/ou magnétique de commande en rotation du rotor 4 qui, lorsque ledit organe de commande **O** est repoussé depuis sa position de référence dans une position quelconque, est mis sous contrainte pour pouvoir le ramener à nouveau, par rotation du rotor 4, dans cette même position de référence.

Ces moyens de rappel élastiques et/ou magnétiques 21 peuvent encore être définis par un élément élastique et/ou magnétique 23 agissant directement sur ledit organe de commande O pour repousser celui-ci dans ladite position en référence depuis une position quelconque dans laquelle il a été amené préalablement par le moteur 2, ceci évidemment en cas de coupure d'alimentation de ce dernier.

Pour en revenir à l'élément élastique et/ou magnétique 22 susceptible de communiquer un mouvement de rotation au rotor 4, il peut être défini, comme représenté dans les figures 1 et 2, sous forme d'un ressort spiral en prise avec l'axe 24 de ce rotor 4 s'étendant au-delà du stator 3, du côté opposé par rapport à l'extrémité 18 émergeante de la tige filetée 17.

L'avantage d'un tel ressort spiral consiste en ce qu'il est d'encombrement réduit et qui, dans le cas de petits actionneurs, est à même de produire un couple suffisant pour obtenir le résultat recherché. En particulier, un tel ressort spiral est en mesure de travailler sur plusieurs tour, voire de produire un couple de rappel sensiblement constant sur la totalité de la course de l'actionneur.

On notera, que le couple de rappel Co que doit produire cet élément élastique doit être tel que :

$$Co > C_{frottement} + C_{détente}$$

En somme, ce couple doit être en mesure de vaincre le couple résistant produit par les frottements et le couple de détente, c'est à dire le couple magnétostatique sans courant du moteur 2. Il est par conséquent important que celui-ci soit le plus faible possible d'où la conception du moteur tel que défini précédemment. En effet, s'il convient de définir l'élément élastique et/ou magnétique d'une raideur supérieure, précisément pour être à même de s'opposer à un couple résistant plus important, corrélativement il est nécessaire de surdimensionner le moteur de sorte qu'il soit lui-même apte à produire un couple défini, non seulement pour lui permettre d'assurer la fonction d'actionneur demandé, mais aussi pour contrecarrer le couple résistant que vient nécessairement procurer cet élément élastique.

Dans le cas d'usage d'un élément élastique et/ou magnétique 23 venant agir directement sur l'organe de commande O, ici la tige filetée 17, il est impératif que le mécanisme d'entraînement 5 soit de type réversible.

Dans le cas d'un système tel que décrit, tige filetée 17 et écrou 16, le critère de choix du pas est tel que :

$$P > \mu . \pi . Dia$$

avec p le pas, Dia le diamètre moyen de la vis et $\mu$ le coefficient de frottement entre la tige filetée 17 et l'écrou 16.

Dans un tel système de transformation du mouvement, l'effort axial F nécessaire à obtenir la réversibilité est tel que :

$$F > 2.\pi.C/p.\eta'$$

avec

C : couple résiduel en fonctionnement sans courant (couple magnétostatique sans courant + couple de frottement aux paliers)

$\eta'$ : rendement de translation vers rotation de la vis

Si, là encore il est important que le couple magnétostatique sans courant soit aussi faible que possible de manière à minimiser l'effort nécessaire à la réversibilité, il convient aussi de maximiser le rendement $\eta'$. En effet, ce rendement est fonction du coefficient de frottement qu'il convient donc de minimiser. Or dans le temps et sous l'effet des pressions de contact à l'interface tige filetée-écrou, ce coefficient de frottement $\mu$ se dégrade et ne permet plus d'être aussi réversible.

Aussi et dans le cadre d'un mode de réalisation préférentiel tel que représenté dans les figures 1 et 2, l'actionneur comporte, en tant que moyens de rappel élastiques et/ou magnétiques 21, à la fois, un élément élastique et/ou magnétique susceptible d'entraîner en rotation le rotor 4 dans une direction définie tel à repousser l'organe de commande O dans sa position de référence et un élément élastique et/ou magnétique 23 susceptible d'agir directement sur cet organe de commande O dans ce même but.

La singularité des systèmes hélicoïdaux, et en particulier du système vis-écrou 14, est de présenter un rendement variable avec l'angle d'hélice. Aussi, dans le cas où il est recherché un coefficient de réduction élevée, imposant un angle réduit, il en résulte un rendement direct et surtout un rendement inverse faibles et très pénalisant pour la fonction de rappel élastique de l'actionneur.

La solution telle que définie dans figure 3 permet de palier en partie à la faiblesse de ces rendements. En fait, dans ce cas le système vis écrou 14 ne nécessite plus de fonction d'anti-rotation et l'écrou 16, lié au rotor 4, décrit un mouvement hélicoïdal sur la tige filetée fixe 17B, et transmet la translation à la l'arbre de sortie 0 au travers d'un roulement unique.

Par ailleurs, de manière avantageuse l'on a imaginé distinguer, au moins en partie, les fonctions de transformation de mouvement et de réduction, en associant auxdits moyens d'entraînement 5 un dispositif réducteur réversible indépendant 43.

Comme visible dans les figures 4 et 5, un tel dispositif réducteur réversible peut emprunter la forme d'un train épicycloïdal 44 au travers duquel le rotor 4 attaque, selon le mode d'exécution de la figure 4, l'écrou 16 en prise avec la tige filetée 17, ceux-ci étant conçus avec un pas important, donc parfaitement réversibles. Dans la conception selon la figure 5, il est fait appel à un système 14A galet 40- came 41.

Dans les figures 6 à 8, ce dispositif réducteur 43 se présente sous forme d'un différentiel 45 au travers duquel il est créé un différentiel de vitesse de rotation entre, dans le cas de la figure 6, l'écrou 16 que porte le rotor 4 est une vis 17A, solidaire en translation et libre en rotation, de l'organe de commande O.

Dans le cas de la figures 7, le différentiel 45 s'intercale entre la came 41 que porte le rotor 4 et le galet 40 solidaire de l'arbre de sortie 46 de ce différentiel 45. Là encore, cet arbre de sortie 46 est solidaire en translation tout en étant libre en rotation de l'organe de commande O.

Dans ces différentes architectures, l'utilisation d'un train différentiel, entre les deux pièces réalisant la transformation de mouvement, présente l'avantage de pouvoir réaliser une réduction importante et toujours réversible, dans un encombrement réduit.

Le principe de ce réducteur différentiel 45 consiste à entraîner, à des vitesses différentes mais proches l'une de l'autre, les deux organes permettant de réaliser la transformation de mouvement :

- La vis 17A et l'écrou 16 dans le cas de la figure 6.

- Le galet 40 et la came 41 dans le cas de la figure 7.

Il est bien entendu que la réduction obtenue au travers du différentiel est d'autant plus importante, que les vitesses des deux organes de transformation de mouvement sont proches.

Dans la configuration selon la figure 8, le rotor 4 commande en rotation la première came 41, ainsi qu'au travers du différentiel 45 la seconde came 41A de profil inverse. La vitesse différentielle de ces came 41 et 41A soumet le galet 40, sous forme d'une goupille, à un déplacement axial lequel est retransmis à l'organe de commande O

Dans ce dernier cas la transformation de mouvement est obtenu par trois organes différents : les deux cames 41 et 41A de profils opposés et la goupille 40 s'appuyant contre les deux hélices sous l'action du ressort de rappel.

La goupille 40 est entraînée par la came 41 et retenue par l'autre 41A de sorte qu'elle est soumise à un mouvement de translation et de rotation, laquelle rotation est distincte des vitesses dédites cames.

Le mouvement de cette goupille 40 peut alors être transmis à l'organe de commande 0 au travers d'une liaison pivot de façon à ne conserver que la translation désirée en sortie d'actionneur.

Il est important de noter que la transformation de mouvement à deux hélices présente une réduction de mouvement intrinsèque.

En effet la goupille 40 évoluant le long des deux profils hélicoïdaux correspondant aux cames 41, 41A, il faut, pour induire un déplacement axial donné, une rotation relative de ces cames 41 et 41A plus importante, dans le système tel que représenté figure 8, que celui nécessaire dans le cas d'un système à simple came tel que représenté figure 7.

On a donc, dans le cas de la figure 8, une réduction de mouvement générée par le réducteur différentiel à laquelle s'ajoute une réduction supplémentaire intrinsèque à l'utilisation de deux profils hélicoïdaux.

De plus, cette technique de transformation permet d'éviter le blocage en rotation du galet que défini la goupille, ceci contrairement aux systèmes hélicoïdaux traditionnels. Aussi, elle évite les pertes par frottement qu'engendre, normalement, ce type de blocage et le rendement mécanique s'en trouve d'autant augmenté.

Au final, cette transformation de mouvement singulière présente les avantages suivants :

- Une réduction de mouvement supérieure à celle obtenue avec un système traditionnel à un seul profil hélicoïdal ou vis écrou.

- Un rendement supérieur à ces mêmes systèmes.

Le design représenté en figure 8 permet de constater que ces deux concepts d'entraînement différentiel et de transformation à double hélice se marient facilement et permettent d'aboutir à un actionneur intéressant en terme de réduction de mouvement, de rendement et de compacité.

Il est précisé que la présente invention n'est nullement limitée à ces différents modes de réalisation, qu'il s'agisse des moyens d'entraînement 5 que du dispositif réducteur 43.

Les figures 1 et 2 correspondent à des modes de réalisation de l'invention qui se distinguent principalement au travers de leur dispositif de détection de position 25, 25A respectif.

Ainsi, selon un premier mode de réalisation, ce dispositif 25 consiste, tel que représenté dans la figure 1, en des éléments magnéto-sensibles, tels que des sondes à effet Hall 26, intégrés de manière connue au stator 3 et prévues aptes à détecter les pôles magnétiques du rotor 4 à l'intérieur même du moteur 2. Ainsi, en connaissant la géométrie de ce dernier et grâce à une unité de gestion électronique, les signaux délivrés par ces sondes à effet Hall 26 permettent d'en déduire la position angulaire du moteur 2 et de réaliser un asservissement ou une régulation en position sur une consigne sans utiliser de capteur ou de codeur de position supplémentaire.

Dans le cas où la résolution linéaire de positionnement en utilisant les signaux d'autocommutation comme mesure de position est insuffisante pour l'application visée, il peut être utilisé en tant que dispositif de détection de position 25A, un capteur de position linéaire 27 comme représenté dans la figure 2. La position linéaire est alors connue par rapport à une position de référence établie par une butée mécanique. De plus, en connaissant la position linéaire ainsi que la géométrie de l'actionneur, on peut déduire la position angulaire du rotor 4 du moteur et, ainsi, réaliser la commutation de l'alimentation des phases sans utiliser cette fois-ci de sonde de Hall.

En particulier, selon le mode de réalisation visible dans cette figure 2, la tige filetée 17, définissant l'organe de commande O, traverse de part en part le rotor 4 du côté de son extrémité 19, opposée à celle 18 agissant plus particulièrement en tant qu'organe de commande, pour coopérer avec ledit capteur de position 27 de type électromagnétique sans contact, tel que décrit dans le document WO-93.23720.

En particulier, ce capteur 27 comporte un aimant permanent 28 se situant dans le prolongement de la tige filetée 17 et rendu solidaire de cette dernière à son extrémité 19. Cet aimant 28 se déplace entre un stator 29 et une culasse 30. Une sonde de hall analogique 31 est placée dans un entrefer de mesure réalisé dans la culasse 30. Ainsi, en fonction de la position linéaire de la tige filetée 17, donc de l'aimant 28, la sonde de Hall 31 voit des variations de champs magnétiques dans l'entrefer de mesure. Elle délivre alors un signal linéaire de position.

Bien évidemment l'on peut encore imaginer d'autres types de dispositifs de détection de position en association avec un actionneur électrique linéaire conforme à l'invention.

## Revendications

1.   Actionneur linéaire comprenant un moteur électrique du type synchrone polyphasé sans balais (2) comportant un stator (3) et un rotor (4), ce dernier agissant sur un organe de commande (0) au travers de moyens d'entraînement (5) prévus aptes à transformer sur plusieurs tours son mouvement de rotation en un déplacement linéaire, **caractérisé par le fait :**

   - **qu'**il comporte des moyens de rappel élastiques et/ou magnétiques (21) définis aptes à ramener systématiquement dans une position de référence l'organe de commande (O), en cas de coupure d'alimentation du moteur (2) ;
   - **que** le moteur (2) comporte un dispositif de détection de position (25 ; 25A) contribuant, en combinaison avec une unité de gestion électronique, à l'asservissement ou la régulation en position du rotor (4), donc de l'organe de commande (O) ;
   - et **qu'**aux moyens d'entraînement (5), prévus pour transformer le mouvement de rotation du rotor (4) en un mouvement linéaire, est associé un dispositif réducteur (43) réversible indépendant

2.   Actionneur linéaire selon la revendication 1, **caractérisé par le fait que** les moyens de rappel élastiques et/ou magnétiques (21) se présentent sous forme d'au moins un élément élastique et/ou magnétique (22) de commande en rotation du rotor (4) prévu apte, par action sur ce dernier, à repousser l'organe de commande (O) partant d'une position quelconque qui lui a été conférée préalablement par le moteur (2), dans ladite position de référence.

3.   Actionneur linéaire selon l'une quelconque des revendications précédentes, **caractérisé par le fait que** les moyens de rappel élastiques et/ou magnétiques (21) sont définis par un élément élastique et/ou magnétique (23) prévu apte à agir, directement, sur l'organe de commande (O) pour repousser celui-ci, partant d'une position quelconque qui lui a été conférée par le moteur (2), dans ladite position de référence.

4.   Actionneur selon la revendication 1, **caractérisé par le fait que** les moyens de rappel élastiques et/ou magnétiques (21) sont définis sous forme d'une combinaison d'un élément élastique et/ou magnétique (22) de commande en rotation du rotor (2) et d'un élément élastique et/ou magnétique (23) agissant directement sur l'organe de commande (O), ceci de manière apte à ramener cet organe de commande (O) dans une position de référence, partant d'une position quelconque qui lui a été conférée préalablement par le moteur (2).

**5.** Actionneur linéaire selon l'une quelconque des revendications précédentes, **caractérisé par le fait que** les moyens d'entraînement (5) prévus aptes à transformer le mouvement de rotation du rotor (4) en un mouvement linéaire sont conçus de type réversible.

**6.** Actionneur linéaire selon l'une quelconque des revendications précédentes, **caractérisé par le fait que** les moyens d'entraînement (5) prévus aptes à transformer le mouvement de rotation du rotor (4) en un mouvement linéaire sont définis par un système vis-écrou (14), le rotor (4) comportant au niveau d'un alésage axial (15) un écrou (16) en prise avec une tige filetée coaxiale (17 ; 17A ; 17B) prévue apte à définir directement ou indirectement, l'organe de commande (O).

**7.** Actionneur linéaire selon la revendication 6, **caractérisé par le fait que** l'écrou (16) que porte le rotor (4) est monté mobile sur une tige filetée fixe (17B) de manière apte à se déplacer, avec un mouvement hélicoïdal, sous le stator (3) et transmettre son déplacement linéaire à l'organe de commande (O) immobilisé en rotation par des moyens appropriés.

**8.** Actionneur linéaire selon la revendication 6 ou 7, **caractérisé par le fait que** le système vis-écrou (14) est du type vis à bille à faible coefficient de frottement.

**9.** Actionneur linéaire selon l'une quelconque des revendications 1 à 5, **caractérisé par le fait que** les moyens d'entraînement (5), prévus aptes à transformer le mouvement de rotation du rotor (4) en un déplacement linéaire adoptent la forme d'un système (14A) du type galet (40)-came (41), le galet (40), associé à l'organe de commande (O) évoluant le long d'une came circulaires (41) mise en rotation, directement ou indirectement, par le rotor (4).

**10.** Actionneur linéaire selon l'une quelconque des revendications 1 à 5, **caractérisé par le fait que** les moyens d'entraînement (5), prévus aptes à transformer le mouvement de rotation du rotor (4) en un déplacement linéaire comportent une première came (41) et une seconde came (41A) avec des profils croisés prévues aptes à être entraînées en rotation avec un différentiel de vitesse pour induire à un galet (40A), sous forme d'une goupille, un glissement axial à même de provoquer la translation de l'organe de commande **(O).**

**11.** Actionneur linéaire selon l'une quelconque des revendications précédentes, **caractérisé par le fait que** le dispositif de détection (25) consiste en des éléments magnéto-sensibles, tels que sondes à effet Hall (26), intégrés au stator (3) du moteur (3) de manière apte à détecter les pôles magnétiques (7) du rotor (4).

**12.** Actionneur linéaire selon la revendication 11, **caractérisé par le fait que** le dispositif de détection (25A) consiste en un capteur de position linéaire (27) associé à l'organe de commande (O).

**13.** Actionneur linéaire selon l'une quelconque des revendications précédentes, **caractérisé par le fait que** le moteur (2) comporte un rotor (4) comportant N paires de pôles rotoriques (7) aimantés radialement en sens alterné, N étant égal ou supérieur à quatre tout en étant différent d'un multiple de trois, le stator (3) comportant P×9 pôles (8) identiques espacés de 40°/P, lesdits pôles statoriques (8) étant regroupés consécutivement par trois de manière à définir un circuit en W, regroupant trois pôles statoriques (8) consécutifs dont le pôle statorique central porte le bobinage (9) de la phase correspondante (10), lesdits pôles statoriques centraux (8) de deux circuits en W et correspondant chacun à une phase étant espacés angulaire de 120°.

**Patentansprüche**

**1.** Linearantrieb, umfassend einen mehrphasigen bürstenlosen Synchron-Elektromotor (2), der einen Stator (3) und einen Rotor (4) umfaßt, wobei dieser letztere auf ein Steuerorgan (O) über Antriebsmittel (5) wirkt, die geeignet vorgesehen sind, um seine Rotationsbewegung über mehrere Umdrehungen in eine Linearbewegung umzuwandeln, **dadurch gekennzeichnet,**

- **daß** er elastische und/oder magnetische Rückstellmittel (21) umfaßt, die geeignet vorgesehen sind, um systematisch das Steuerorgan (O) im Fall einer Unterbrechung der Stromzufuhr zum Motor (2) in eine Bezugsposition zurückzubringen,
- **daß** der Motor (2) eine Vorrichtung zur Positionserfassung (25, 25A) umfaßt, beitragend, in Kombination mit einer elektronischen Steuereinheit, zur Nachlaufregelung oder zur Regulierung der Position des Rotors (4), also des Steuerorgans (O),
- und **daß** den Antriebsmitteln (5), vorgesehen, um die Rotationsbewegung des Rotors (4) in eine Linearbewegung umzuwandeln, eine unabhängige umkehrbare Reduktionsvorrichtung (43) zugeordnet ist.

**2.** Linearantrieb nach Anspruch 1, **dadurch gekennzeichnet, daß** die elastischen und/oder magnetischen Rückstellmittel (21) als wenigstens ein elastisches und/oder magnetisches (22) Element zur Steuerung in Drehung des Rotors (4) ausgestaltet sind, geeignet vorgesehen, um durch eine Wirkung auf diesen letzteren das Steuerorgan (O) ab einer beliebigen Position, die ihm zuvor durch den Motor (2) verliehen worden ist, in die besagte Bezugsposition zurückzudrängen.

**3.** Linearantrieb nach irgendeinem der vorgehenden Ansprüche, **dadurch gekennzeichnet, daß** die elastischen und/oder magnetischen Rückstellmittel (21) durch ein elastisches und/oder magnetisches Element (23) gebildet sind, geeignet vorgesehen, um direkt auf das Steuerorgan (O) zu wirken, um dieses ab einer beliebigen Position, die ihm durch den Motor (2) verliehen worden ist, in die besagte Bezugsposition zurückzudrängen.

**4.** Antrieb nach Anspruch 1, **dadurch gekennzeichnet, daß** die elastischen und/oder magnetischen Rückstellmittel (21) als eine Kombination aus einem elastischen und/oder magnetischen Element (22) zur Steuerung in Drehung des Rotors (2) und einem elastischen und/oder magnetischen (23) Element, das direkt auf das Steuerorgan (O) wirkt, gebildet sind, und zwar auf eine Art und Weise, die geeignet ist, um dieses Steuerorgan (O) ab einer beliebigen Position, die ihm zuvor durch den Motor (2) verliehen worden ist, in eine Bezugsposition zurückzubringen.

**5.** Linearantrieb nach irgendeinem der vorgehenden Ansprüche, **dadurch gekennzeichnet, daß** die Antriebsmittel (5), geeignet vorgesehen, um die Rotationsbewegung des Rotors (4) in eine Linearbewegung umzuwandeln, umkehrbar vorgesehen sind.

**6.** Linearantrieb nach irgendeinem der vorgehenden Ansprüche, **dadurch gekennzeichnet, daß** die Antriebsmittel (5), geeignet vorgesehen, um die Rotationsbewegung des Rotors (4) in eine Linearbewegung umzuwandeln, durch ein System aus Schraube und Mutter (14) gebildet sind, wobei der Rotor (4) im Bereich einer Axialbohrung (15) eine Mutter (16) umfaßt, die mit einem koaxialen Gewindeschaft (17; 17A; 17B) im Eingriff steht, geeignet vorgesehen, um direkt oder indirekt das Steuerorgan (O) zu bilden.

**7.** Linearantrieb nach Anspruch 6, **dadurch gekennzeichnet, daß** die Mutter (16), die der Rotor (4) trägt, beweglich auf einem festen Gewindeschaft (17B) montiert ist, auf eine Art und Weise, die geeignet ist, um sich mit einer wendelförmigen Bewegung unter dem Stator (3) zu bewegen und ihre Linearbewegung dem Steuerorgan (O) zu übermitteln, das durch angemessene Mittel drehfest gemacht wird.

**8.** Linearantrieb nach Anspruch 6 oder 7, **dadurch gekennzeichnet, daß** das System aus Schraube und Mutter (14) der Art Kugelumlaufspindel mit geringem Reibungskoeffizienten ist.

**9.** Linearantrieb nach irgendeinem Anspruch 1 bis 5, **dadurch gekennzeichnet, daß** die Antriebsmittel (5), geeignet vorgesehen, um die Rotationsbewegung des Rotors (4) in eine Linearbewegung umzuwandeln, die Form von einem System (14A) der Art Rolle (40) und Nocken (41) annehmen, wobei die Rolle (40), die dem Steuerorgan (O) zugeordnet ist, sich entlang eines kreisförmigen Nockens (41) bewegt, der durch den Rotor (4) direkt oder indirekt in Drehung gebracht ist.

**10.** Linearantrieb nach irgendeinem Anspruch 1 bis 5, **dadurch gekennzeichnet, daß** die Antriebsmittel (5), geeignet vorgesehen, um die Rotationsbewegung des Rotors (4) in eine Linearbewegung umzuwandeln, einen ersten Nocken (41) und einen zweiten Nocken (41A) mit gekreuzten Profilen umfassen, die geeignet vorgesehen sind, um mit einem Geschwindigkeitsdifferential in Drehung getrieben zu werden, um eine Rolle (40A) in Form von einem Stift axial gleiten zu lassen, fähig, die Translationsbewegung des Steuerorgans (O) hervorzurufen.

**11.** Linearantrieb nach irgendeinem der vorgehenden Ansprüche, **dadurch gekennzeichnet, daß** die Erfassungsvorrichtung (25) aus magnetisch empfindlichen Elementen wie Sonden mit Halleffekt (26) besteht, die in dem Stator (3) des Motors (3) integriert sind, auf eine Art und Weise, die geeignet ist, um die Magnetpole (7) des Rotors (4) zu erfassen.

**12.** Linearantrieb nach Anspruch 11, **dadurch gekennzeichnet, daß** die Erfassungsvorrichtung (25A) aus einem linearen Positionssensor (27) besteht, der dem Steuerorgan (O) zugeordnet ist.

**13.** Linearantrieb nach irgendeinem der vorgehenden Ansprüche, **dadurch gekennzeichnet, daß** der Motor (2) einen Rotor umfaßt (4), der N Paare von rotorischen Polen (7) umfaßt, die radial in abwechselnder Richtung magnetisiert sind, wobei N gleich oder größer als vier sei, seiend gleichzeitig verschieden von einem Vielfachen von drei, wobei der Stator (3) Px9 identische, in 40°/P beabstandete Pole (8) umfaßt, wobei die besagten statorischen Pole (8) aufeinanderfolgend je drei umgruppiert seien, derart, um einen W-förmigen Kreis zu bilden, umgruppierend drei aufeinanderfolgende statorische Pole (8), von den der zentrale statorische Pol die Spule (9) der entsprechenden Phase (10) trägt, wobei die besagten zentralen statorischen Pole (8) der beiden W-förmigen Kreise und entsprechend jeweils einer Phase winklig in 120° beabstandet seien.

## Claims

1. Linear actuator comprising a brushless multiphase synchronous electric motor (2) including a stator (3) and a rotor (4), the latter acting on a control organ (O) through driving means (5) designed capable of converting, over several revolutions, its rotational movement into a linear displacement, **characterised in that** :

   - it includes springy and/or magnetic restoring means (21) designed capable of systematically restoring the control unit (O) into a reference position in the event of interruption of the power supply to the motor (2) ;
   - the motor (2) includes a position-detection device (25 ; 25A) contributing, in combination with an electronic control unit, to the control or the adjustment of the position of the rotor (4), hence of the control organ (O) ;
   - and with the driving means (5), designed capable of converting the rotational motion of the rotor (4) into a linear movement, is associated an independent reversible reduction device (43).

2. Linear actuator according to claim 1, **characterised in that** the springy and/or magnetic restoring means (21) are in the form of at least one springy and/or magnetic element (22) for controlling the rotation of the rotor (4) designed capable, by an action on the latter, of restoring the control organ (O), starting from any position previously imparted to it by the motor (2), into said reference position.

3. Linear actuator according to any of the preceding claims, **characterised in that** the springy and/or magnetic restoring means (21) are defined by a springy and/or magnetic element (23) designed capable of acting directly on the control organ (O) in order to restore it, starting from any position imparted to it by the motor (2), into said reference position.

4. Actuator according to claim 1, **characterised in that** the springy and/or magnetic restoring means (21) are defined in the form of a combination of a springy and/or magnetic element (22) for controlling the rotation of the rotor (2) and of a springy and/or magnetic element (23) acting directly on the control organ (O), this so as to restore this control organ (O) into a reference position, starting from any position previously imparted to it by the motor (2).

5. Linear actuator according to any of the preceding claims, **characterised in that** the driving means (5) designed capable of converting the rotational motion of the rotor (4) into a linear movement are designed of a reversible type.

6. Linear actuator according to any of the preceding claims, **characterised in that** the driving means (5) designed capable of converting the rotational movement of the rotor (4) into a linear movement are defined by a screw and nut system (14), the rotor (4) including, at the level of an axial bore (15) a nut (16) engaged with a coaxial threaded rod (17 ; 17A ; 17B) designed capable of defining, directly or indirectly, the control organ (O).

7. Linear actuator according to claim 6, **characterised in that** the nut (16) carried by the rotor (4) is mounted moveably on a fixed threaded rod (17B) so as to be capable of moving, according a helical motion, under the stator (3) and of transmitting its linear displacement to the control organ (O) immobilised in rotation by adequate means.

8. Linear actuator according to claim 6 or 7, **characterised in that** the screw and nut system (14) is of the ball screw type with low friction coefficient.

9. Linear actuator according to any of claims 1 to 5, **characterised in that** the driving means (5) designed capable of converting the rotational motion of the rotor (4) into a linear displacement adopt the form of a system (14A) of the type roller (40) and cam (41), the roller (40) associated with the control organ (O) evolving along a circular cam (41) put into rotation, directly or indirectly, by the rotor (4).

10. Linear actuator according to any of claims 1 to 5, **characterised in that** the driving means (5) designed capable of converting the rotational motion of the rotor (4) into a linear displacement include a first cam (41) and a second cam (41A) with crossed profiles designed capable of being rotated with a differential speed, in order to impart to a roller (40A), in the form of a pin, an axial sliding capable of causing the translation of the control organ (O).

11. Linear actuator according to any of the preceding claims, **characterised in that** the detection device (25) consists of magneto-sensitive elements, such as Hall sensors (26), integrated into the stator (3) of the motor (3) so as to be capable of detecting the magnetic poles (7) of the rotor (4).

12. Linear actuator according to claim 11, **characterised in that** the detection device (25A) consists of a linear position sensor (27) associated with the control organ (O).

**13.** Linear actuator according to any of the preceding claims, **characterised in that** the motor (2) comprises a rotor (4) including N pairs of rotor poles (7) radially magnetised in an alternate direction, N being greater or equal to four, while being different from a multiple of three, the stator (3) including Px9 identical poles (8) spaced apart by 40°/P, said stator poles (8) being grouped consecutively three by three, so as to define a W-shaped circuit, grouping three consecutive stator poles (8) the central stator pole of which carries the coil (9) of the corresponding phase (10), said central stator poles (8) of two W-shaped circuits, each corresponding to a phase, being angularly spaced apart by 120°.

**Figure 1 :**

**Figure 2 :**

**Figure 3 :**

**Figure 4 :**

**Figure 5 :**

**Figure 6 :**

**Figure 7 :**

**Figure 8 :**